# EUROPÄISCHE PATENTSCHRIFT

(11) **EP 1 758 729 B1**
(45) Veröffentlichungstag und Bekanntmachung des Hinweises auf die Patenterteilung: **27.11.2013**
(21) Anmeldenummer: 05739878.6
(22) Anmeldetag: 28.04.2005
(51) Int. Cl.: B29C 65/16, B81C 3/00

(54) **VERFAHREN ZUM VERBINDEN VON WERKSTÜCKEN AUS KUNSTSTOFF**
METHOD FOR JOINING PLASTIC WORKPIECES
PROCEDE DE LIAISON DE PIECES EN PLASTIQUE

(30) Priorität: 24.06.2004 DE 102004030619
(43) Veröffentlichungstag der Anmeldung: 07.03.2007
(73) Patentinhaber: Karlsruher Institut für Technologie, 76131 Karlsruhe (DE)
(72) Erfinder: PFLEGING, Wilhelm, 76344 Eggenstein-Leopoldshafen (DE); BALDUS, Oliver, 12557 Berlin (DE); BALDINI, Alessandro, I-00055 Ladispoli (IT)
(86) Internationale Anmeldenummer: PCT/EP2005/004536
(87) Internationale Veröffentlichungsnummer: WO 2006/000273

(56) Entgegenhaltungen:
- EP-A- 0 826 503
- FR-A- 1 506 163
- FR-A- 2 624 041
- US-A- 3 477 194
- US-A- 4 913 762
- US-A1- 2003 201 059
- US-A1- 2004 056 006
- US-A1- 2004 082 145
- US-B1- 6 220 673
- M. MÜNCH, M. WILLMANN, M. SPRITZENDORFER, R. STEGER, G. WAIBEL: "Entwicklung neuer Verbindungstechniken für Komponenten miniaturisierter Mikrofluidiksysteme aus Kunststoff" 27. Juni 2003 (2003-06-27), Seiten 1-139, XP002334519 Gefunden im Internet: URL:www.uni-stuttgart.de/hsg-imat/aif45z.p df> [gefunden am 2005-07-01] in der Anmeldung erwähnt
- JONES I A ET AL: "USE OF INFRARED DYES FOR TRANSMISSION LASER WELDING OF PLASTICS" ANTEC. CONFERENCE PROCEEDINGS, XX, XX, 2000, Seiten 1166-1170, XP000952346

## Beschreibung

Die Erfindung betrifft ein Verfahren zum Verbinden von Werkstücken aus Kunststoff (Polymer), wobei das verbundene Werkstück im sichtbaren Bereich transparent ist.

Beim Verbinden von Polymeren durch lasergestütztes Schweißen nach dem so genannten *Durchstrahlschweißverfahren* wird ein opaker Polymerwerkstoff mit einem transparenten Polymer gleicher Sorte verschweißt. In der Praxis haben sich hierfür Diodenlaser als Strahlquelle gegenüber Nd:YAG-Lasern weitgehend durchgesetzt.

Die DE 195 10 493 A1 offenbart ein Verfahren zum Verschweißen von Werkstücken aus Kunststoff, bei dem zwei Werkstücke durch eine Fügezone miteinander verbunden werden, indem Laserstrahlen das erste Werkstück durchdringen und in das zweite Werkstück gelangen, wodurch die Werkstücke im Bereich der Fügezone einen schmelzflüssigen Zustand annehmen und beim Abkühlen eine Verfestigung der Fügezone erreicht wird. Nachteilig hieran ist, dass den beiden Werkstücken in unterschiedlichen Anteilen Farbstoffpigmente zugesetzt werden, wodurch das Spektrum der Laserstrahlen für das erste Werkstück transparent und für das zweite Werkstück absorbierend ist.

Eine Variante des Durchstrahlschweißverfahrens, mit dem auch die Verbindung von transparenten Polymeren möglich ist, ist das sog. *Clearweld-Verfahren.* Bei diesem Verfahren, das in V. A. Kagan, N. M. Woosman, Advantages of Clearweld Technology for Polyamides, Konferenzbeitrag zur ICALEO, 2002, vorgestellt ist, wird zwischen die transparenten Komponenten eine Absorberschicht aufgebracht. Diese Absorberschicht (Lack) ist im Rohzustand grünlich, wird jedoch nach der Bearbeitung mit den bevorzugten Wellenlängen von 940 nm (Diodenlaser) oder 1064 nm (Nd:YAG Laser) nahezu transparent. Nachteilig hieran ist die zu hohe Durchlaufzeit, die vor allem mit der gebräuchlichen Methode zum Aufbringen der Absorberschicht zusammenhängt.

Aus der US 6,656,315 B2 und dem hierin ausführlich zitierten Stand der Technik ist bekannt, ein Material in die Fügezone einzubringen, das eine Absorption der Laserstrahlen gewährleistet. Während Metalle wie beispielsweise Titan nur zum Verschweißen von Gläsern geeignet sind, werden anorganische Materialien wie z. B. Pigmente, Fasern, Druckerschwärze (die die zu verbindenden Werkstücke im Übrigen verschmiert), oder ausgewählte organische Farbstoffe zum Verschweißen von Kunststoffen verwendet, um in der Fügezone neben einer guten Absorption der Laserstrahlen möglichst gleichzeitig auch deren Streuung zu verringern. Die genannten, in die Fügezone eingebrachten Materialien müssen jedoch eine Dicke von mindestens 1 µm aufweisen, um die Laserenergie in Wärme umzuwandeln. Diese Verfahren sind daher nicht auf Mikrostrukturen anwendbar, da eine Beeinträchtigung der Mikrostruktur insbesondere durch Deformation oder Rissbildung erfolgt.

Die US 6,220,673 B1 offenbart ein Verfahren zum Verbinden von Werkstücken aus Kunststoff, wobei das verbundene werkstück im sichtbaren Bereich transparent ist, mit den Verfahrensschritten
a) Bereitstellen der Werkstücke aus einem Kunststoff, der im sichtbaren Bereich und bei der Wellenlänge eines ersten Lasers transparent ist,
b) Aufbringen jeweils einer Absorptionsschicht auf die Werkstücke, wobei höchstens ein Werkstück unbeschichtet bleibt,
c) Zusammenpressen der Werkstücke mit einem Anpressdruck, wobei jede Absorptionsschicht zwischen zwei Werkstücken angeordnet ist,
d) Beaufschlagen einer der Absorptionsschichten mit einer Laserstrahlung aus dem ersten Laser, dessen Leistung so gewählt ist, dass sich hierdurch die Absorptionsschicht erwärmt und dadurch die beiden der Absorptionsschicht benachbarten Werkstücke miteinander verbunden werden,
e) gegebenenfalls Wiederholen des Verfahrensschritts d) mit einer oder mehreren weiteren Absorptionsschichten,
f) Abkühlen und Wegnehmen des Anpressdrucks, und
g) Entnehmen des verbundenen Werkstücks, wobei die Absorptionsschicht aus Kohlenstoff besteht.

Die FR 2 624 041 A beschreibt ein Verfahren zum Laserschweißen von mindestens zwei Werkstücken, die über ihre Oberflächen in Kontakt zueinander stehen, wobei mindestens eines der Werkstücke transparent für die Wellenlänge der Laserstrahlung ist, die in einer opaken Zone in der Nähe der Kontaktstelle fokussiert wird.

Die FR 1 506 163 A offenbart ein Verfahren zur Verbindung von Werkstücken aus einem Thermoplast unter der Einwirkung von Wärme, die mittels elektromagnetischer Strahlung, z.B. aus einem Laser, bereitgestellt wird.

Die EP 0 826 503 A2 beschreibt ein Verfahren zum Laserschweißen von zwei nichtmetallischen Werkstücken, insbesondere dem Schweißen von Kunststoffbändern an Halbleiterelemente.

Ausgehend hiervon ist es die Aufgabe der vorliegenden Erfindung, ein Verfahren zum Verbinden von Werkstücken aus Kunststoff vorzuschlagen, wobei das verbundene Werkstück im sichtbaren Bereich transparent ist, das die vorher genannten Nachteile und Einschränkungen nicht aufweist. Insbesondere soll dieses Verfahren transparente mikrostrukturierte Werkstoffe aus Kunststoff miteinander schlüssig verbinden, ohne dabei die Mikrostrukturen zu beschädigen.

Diese Aufgabe wird durch die Merkmale des Anspruchs 1 gelöst. Die Unteransprüche beschreiben jeweils vorteilhafte Ausgestaltungen der Erfindung.

Das vorliegende Verfahren zum Verbinden von Werkstücken aus Kunststoff basiert darauf, dass auf die zu verbindenden Werkstücke jeweils eine Absorptionsschicht (absorbierende Schicht) aufgebracht wird, die eine Dicke zwischen 5 nm und 15 nm aufweist. Anschließend werden die Werkstücke mit einem Anpressdruck, der bevorzugt zwischen 0,1 MPa und 1 MPa, besonders bevorzugt zwischen 0,3 MPa und 0,7 MPa liegt, zusammengedrückt, wobei die Absorptionsschichten jeweils zwischen zwei Werkstücken angeordnet sind.

Die Absorptionsschicht besteht aus Kohlenstoff oder Gold. Gold ist zwar nicht transparent, eignet sich aber als Absorptionsschicht für den Schweißprozess. Durch Vakuum-Aufdampfprozesse (Filamentabdampfung; Sputtercoater) oder Spray-Verfahren ist es möglich, transparente Dünnschichten auf transparenten Polymeren abzuscheiden. In einer besonderen Ausgestaltung erfolgt das Aufbringen der Absorptionsschichten über eine Kontaktmaske, um nur ausgewählte Bereiche dem späteren Schweißprozess zugänglich zu machen. Eine alternative Ausgestaltung, um die Absorptionsschicht selektiv zu strukturieren, ist der Einsatz von UV-Lasermikroablation mit einer Wellenlänge des Ablationslasers zwischen 250 nm und 400 nm, besonders bevorzugt ungefähr 355 nm. Viele Polymere sind für diese Wellenlänge transparent, so dass eine selektive Strukturierung der Absorptionsschichten mit Auflösungen im µm-Bereich möglich wird.

Dann wird eine der Absorptionsschichten mit einem ersten Laser beaufschlagt, dessen Strahlung auf die Absorptionsschicht fokussiert ist. Die Leistung dieses Lasers ist so gewählt, dass sich hierdurch die Absorptionsschicht erwärmt und so die beiden der Absorptionsschicht benachbarten Werkstücke miteinander verbunden werden. Die Wellenlänge des ersten Lasers beträgt zwischen 800 nm und 1200 nm, bevorzugt zwischen 920 nm und 960 nm, besonders bevorzugt ungefähr 940 nm (Diodenlaser).

Falls mehrere polymere Werkstücke miteinander verbunden werden sollen, so wird Verfahrensschritt d) mit weiteren Absorptionsschichten, auf die jeweils die Laserstrahlung fokussiert wird, wiederholt. In einer besonderen Ausgestaltung bleibt ein Werkstück unbeschichtet, durch das die Laserstrahlung aus dem Laser hindurch auf die Absorptionsschicht geführt wird.

Nach Abkühlen und Wegnehmen des Anpressdrucks wird schließlich das verbundene Werkstück entnommen.

Besonders geeignet für das vorgeschlagene Verbindungsverfahren sind die Kunststoffe Polymethylmethacrylat (PMMA), Polypropylen (PP), Polycarbonat (PC), Cycloolefincopolymer (COC), Polyvinylidenfluorid (PVDF), Polyetheretherketon (PEEK), Polysulfon (PSU), Polyamid (PA), Polyimid (PI), Polyacteal (POM), Polyäthylen (PE), Polyurethan (PUR), Polyethersulfon (PES) und Teflon, darunter Polytetrafluorethylen (PTFE).

In einer bevorzugten Ausgestaltung wird der Laserstrahl mit einer Scanneroptik senkrecht zu den Absorptionsschichten über die Oberfläche der zu verbindenden Werkstücke geführt. Für den vorliegenden Schweißprozess sind Geschwindigkeiten zwischen 1 und 1000 mm/s, bevorzugt zwischen 10 und 100 mm/s geeignet. Die Laserleistung wird online mit einem Pyrometer geregelt, um die Temperatur im Wechselwirkungsbereich um die Absorptionsschicht konstant zu halten. Beim Kunststoff PMMA liegt zum Beispiel die geeignete Temperatur im Bereich der Glastemperatur des Polymers bei ungefähr 105°C. Abweichungen von ± 5° können bereits zu fehlerhaften Verbindungen führen.

Der Laserstrahl wird über die Grenzfläche der transparenten Polymere geführt, die während des Verfahrens (Fügeprozesses) mit einem Druck von vorzugsweise 0,1- 10 MPa (1 - 10 bar) gegeneinander gepresst werden. Querschliffe an verbundenen Werkstücken aus PMMA oder PVDF zeigen, dass es mit dem vorliegenden Verfahren möglich ist, den thermisch beeinflussten Bereich auf wenige Mikrometer (µm) zu begrenzen. Hierdurch lassen sich mikrostrukturierte PP- und PVDF-Folien mit einer Dicke von 200-250 µm ohne signifikante Schädigung bzw. Deformation der Strukturen verschweißen. Es können damit also Polymere mit einer Dicke von 10 µm bis 10 cm miteinander verbunden werden, ohne ihre Transparenz im Sichtbaren zu verlieren.

Nahezu alle bekannten Polymere weisen eine hohe Strahlungsabsorption bei der Wellenlänge der CO₂-Laserstrahlung (9 - 11 µm) auf. Dadurch ist es möglich, die Polymere mittels eines dritten Lasers, der eine Wellenlänge zwischen 9 µm und 11 µm aufweist, mit hoher Präzision zu schneiden, und zwar mit minimalen Schnittfugenbreiten von ca. 50 µm. Die Schnittfugen besitzen darüber hinaus eine hohe Kantensteilheit. Da es sich um einen thermischen Prozess handelt, bildet sich an der Kante jeweils ein dünner Schmelzfilm aus, der eine Glättung der Kante bewirkt. Die Strukturierung erfolgt in diesem Falle nicht durch Ablation bzw. Formabtrag, der im Allgemeinen mit Schmelzaustrieb und einer starken Kontamination bzw. Debrisbildung und schrägen Kanten verbunden ist, sondern durch Schneiden. Einseitig oder beidseitig gekapselte oder gestufte Strukturen in transparenten Polymeren sind jedoch nur in Verbindung mit dem hier vorgeschlagenen Laserstrahlschweißen möglich.

In einer alternativen Ausgestaltung findet das Schneiden der Polymere über Sublimation durch UV-Strahlung statt, bei der so genanntes *Sublimationsschweißen* auftritt. Hierfür ist ein dritter Laser mit einer Wellenlänge zwischen 150 nm und 400 nm wie zum Beispiel ein Nd:YAG-Laser (266 nm, 355 nm) geeignet, da diese Laserstrahlquelle mit hoher Pulsfrequenz betrieben werden kann. Ebenso kann ein dritter Laser mit einer Wellenlänge zwischen 150 nm und 400 nm eingesetzt werden, um einen dreidimensionalen Formabtrag mittels UV-Laserstrahlung zu erzielen. Für diesen Sublimationsabtrag wird vorzugsweise ein Excimerlaser (Wellenlängen 157 nm, 193 nm bzw. 248 nm) oder ebenfalls ein Nd:YAG-Laser (266 nm, 355 nm) verwendet.

Die Kombination von Schneiden und Schweißen zur Erzeugung eines beliebigen dreidimensionalen mikrofluidischen Systems führt zu einer hohen Formgenauigkeit mit steilen Flanken und hohen Kantenqualitäten bei kleinen Rauwerten. Das erfindungsgemäße Verfahren ist insgesamt ein vollständig lasergestützter Prozess, der kostengünstig, einfach und schnell durchführbar ist. Es erfolgt ein geringer thermischer Eintrag ins Material, wodurch eine Schädigung von Mikrostrukturen unterbleibt. Damit lässt sich ein schichtweiser Aufbau auf mikrostrukturierten Polymerfolien herstellen.

Aus http://www.uni-stuttgart.de/hsg-imat/aif45z.pdf, Seite 82-91, vom 27.06.2003 kann entnommen werden, dass sich das bekannte Laserdurchstrahlschweißen nicht ohne weiteres auf Mikrostrukturen übertragen lässt, da folgende Defekte an den Mikrostrukturen auftreten: Deformation von Mikrokanälen, Porenbildung und Rissbildung bzw. Aufplatzen der Verschweißungen infolge thermisch induzierter innerer Spannungen.

Das Laserschweißen von Polymeren stellt eine Möglichkeit dar, mikrostrukturierte Komponenten effizient herzustellen. Ein besonderer Vorteil des lasergestützten Schweißens von Polymeren gegenüber den klassischen Verbindungsverfahren wie Kleben, Heizelement-, Ultraschall- oder Vibrationsschweißen besteht in der Möglichkeit berührungslos und flexibel arbeiten zu können. Die Energieeinbringung kann je nach Verfahrensvariante lokal mit hoher Flexibilität und Präzision bei hoher Reproduzierbarkeit erfolgen.

In der Mikroverfahrenstechnik und Mikrofluidik bzw. Bioanalytik ist derzeit keine Laserschweißtechnologie etabliert, die transparente polymere mikrostrukturierte Komponenten miteinander schlüssig verbindet, ohne dabei die Mikrostrukturen zu beschädigen. Das ist aber genau das, was das vorliegende Verfahren leistet. Durch die Kombination von Laserstrahlschneiden und Laserstrahlschweißen wird ein Prozess ermöglicht, der als *Rapid Manufacturing* angesehen werden kann. Hiermit lassen sich im Minuten-Takt funktionsfähige Bauelemente aus nahezu beliebigem Polymermaterial fertigen.

Das erfindungsgemäße Verfahren lässt sich vielseitig einsetzen. Beispielhaft genannt sind:
- Fertigung von polymeren Mikromischern,
- Bioanalytik, wie z.B. Deckelung von CE-Chips,
- PA-Filter in der Automotive-Branche,
- PC-Brillengläser,
- PA-Elektronik-Schlüssel,
- POM-Gehäuse für Pumpen und Turbinen, Kunststofffenster usw.

Die Erfindung weist insbesondere die folgenden Vorteile auf:
- Verbindung von transparenten und mikrostrukturierten Polymeren ohne Schädigung der Mikrostrukturen;
- Nahezu jeder Kunststoff (Polymer) kann verwendet werden, da diese in der Regel um 940 nm transparent sind;
- Verbindung von dicken und dünnen (z.B. Folien mit einer Dicke von 200 µm) Polymeren möglich;
- *Rapid Manufacturing* funktionsfähiger Bauteile im Minutentakt.

Die Erfindung wird im Folgenden anhand von Ausführungsbeispielen und den Figuren näher erläutert. Es zeigen:
- **Fig. 1**: Schematische Darstellung des Verbindens von Werkstücken aus Kunststoff.
- **Fig. 2**: Schematische Darstellung des Verbindens von mikrostrukturierten Werkstücken aus Kunststoff.
- **Fig. 3**: Verbinden zweier Werkstücke durch alternierendes Scannen eines Laserstrahls.
- **Fig. 4**: Verbinden eines Stapels von Werkstücken durch alternierendes Scannen eines Laserstrahls.
- **Fig. 5**: a) Schematische Darstellung eines dreidimensionalen Kanalsystems für die Mikrofluidik;
b) Schematische Darstellung eines Mikromischers; beide hergestellt mit dem erfindungsgemäßen Verfahren.
- **Fig. 6**: Anordnung zur Bestimmung der Zugfestigkeit der Verbindung zweier Werkstoffe (schematisch).
- **Fig. 7**: Zugfestigkeit zweier Werkstücke aus PMMA in Abhängigkeit von der Dicke der Absorptionsschicht aus Kohlenstoff.

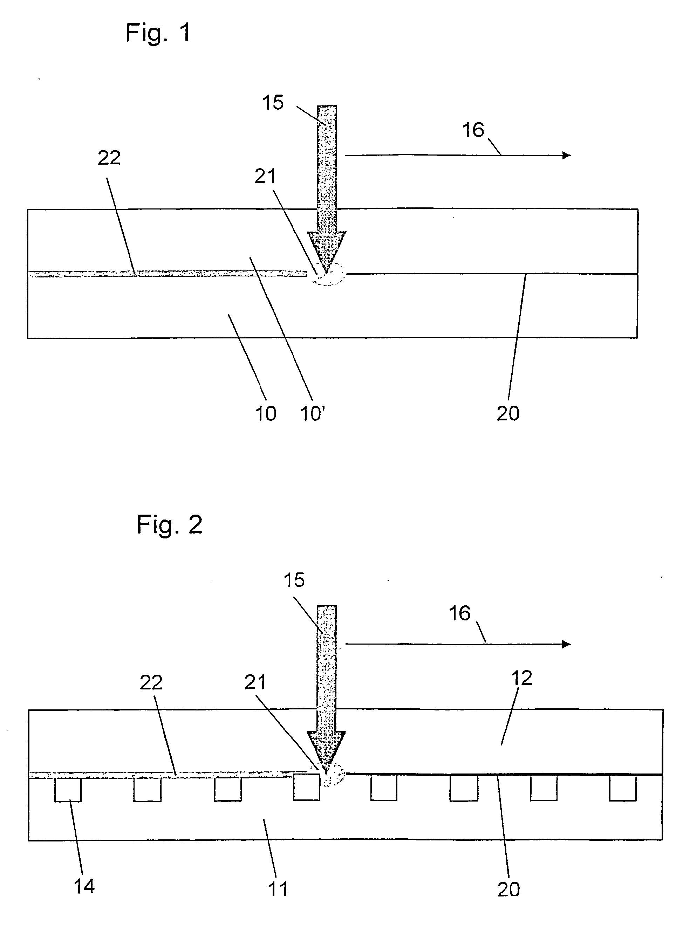

In **Fig. 1** ist das erfindungsgemäße Verfahren zum Verbinden der beiden Werkstücke **10, 10'** aus Kunststoff schematisch dargestellt, wobei auf das Werkstück **10** eine Absorptionsschicht **20** aus Kohlenstoff aufgebracht ist. Ein Laserstrahl **15** mit einer Wellenlänge von 940 nm, der auf die Absorptionsschicht **20** fokussiert ist, wird entlang des Weges **16** bewegt (gescannt). Die Scangeschwindigkeit betrug im Falle von PMMA 20-50 mm/s; der Scanversatz 200 µm.

Die Leistung der Laserstahlung **15** wurde so gewählt, dass die Temperatur in der Laserbeeinflussten Zone **21** die Glastemperatur des Kunststoffs überschreitet (PMMA: 105 °C, PC: 160°C), wodurch sich die Absorptionsschicht **20** erwärmt und dadurch die beiden Werkstücke **10**, **10'** über die Verbindungszone **22** miteinander verbunden werden. Während des Laserscannes wurden die beiden Werkstücke mit einem Anpressdruck zwischen 0,3 und 0,7 MPa (3 bar und 7 bar) zusammengepresst.

In **Fig. 2** wird eine transparente mikrostrukturierte Polymerfolie oder
- platte **11** mit einer weiteren Polymerfolie oder
- platte **12**, die optional ebenfalls mikrostrukuriert sein kann,
genauso wie in **Fig. 1** mit dem erfindungsgemäßen Verfahren verbunden. Die Mikrostrukturen bleiben unverändert erhalten.

Versuche wurden mit Platten (Dicke 1-2 mm) oder Folien (Dicke ca. 200 µm) aus PMMA, PP, PC, COC, PVDF, PEEK, PSU, PA und PTFE (Teflon) erfolgreich durchgeführt. Hierzu wurden die genannten KunststoffPlatten bzw. -Folien in einer Vakuum-Filamentverdampfungsanlage mit Kohlenstoff mit einer Schichtdicke im nm-Bereich beschichtet. Die eingesetzten transparenten Polymere blieben auch nach Abschluss des Fügeprozesses transparent.

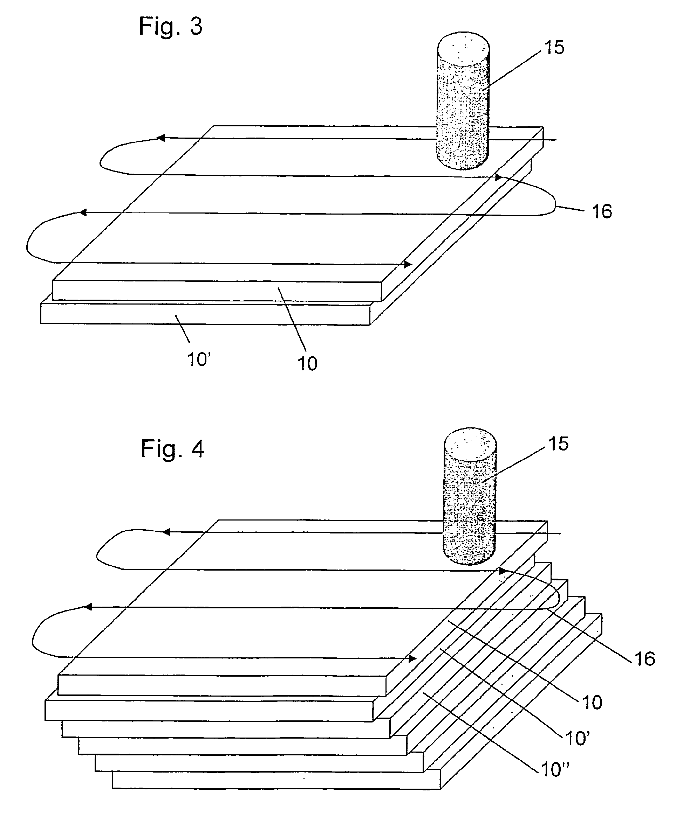

Wie **Fig. 3** zeigt, wird zur Verbindung zweier polymerer Werkstücke der Laserstrahl (d.h. dessen Fokuslage) alternierend über die Grenzfläche der beiden Polymere gescannt, wobei ein Scanver.satz zwischen 1-1000 µm gewählt wird. Da die Polymere transparent für die Laserstrahlung sind und Absorption nur in den Grenzflächen bzw. Absorptionsschichten auftritt, ermöglicht das vorgeschlagene Verfahren eine Stapelung der Polymer-Platten bzw. -Folien und deren Verbindung zu einem verbundenen Werkstück gemäß **Fig. 4** möglich.

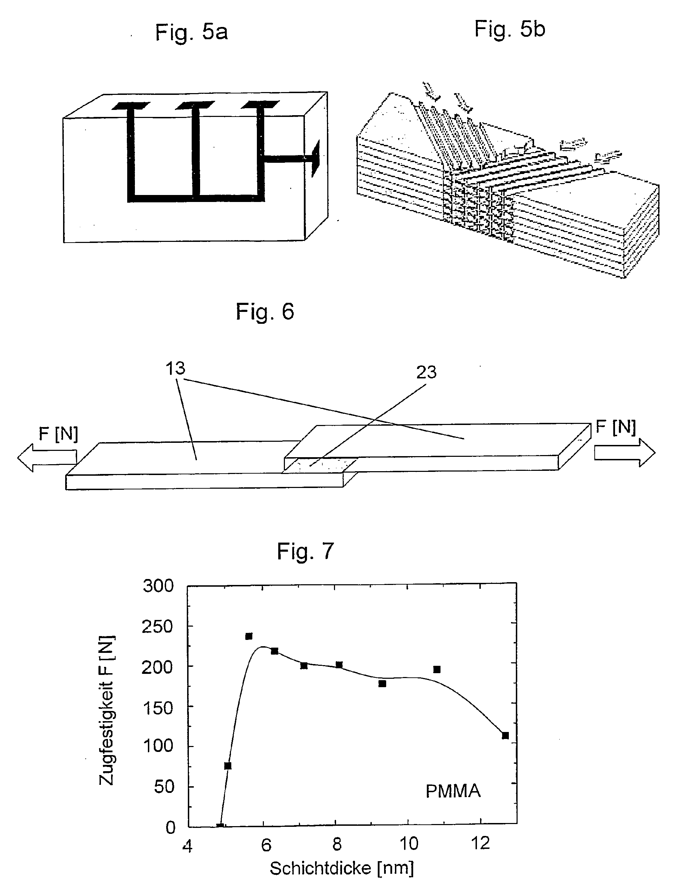

Das vorgeschlagene Verfahren eignet sich beispielsweise für die Erstellung von dreidimensionalen Strukturen, wie sie in der Mikrofluidik (siehe **Fig. 5a**) oder Mikroverfahrenstechnik (siehe **Fig. 5b**) eingesetzt werden.

Die erzielten Verbindungen sind sehr stabil, was mittels in einer Anordnung gemäß **Fig. 6** mittels Zugprüfmaschinen überprüft wurde. Die Zugfestigkeit der verbundenen Werkstücke kann je nach Schweißparameter sogar der Zugfestigkeit des Ausgangsmaterials entsprechen. Aus **Fig. 7** ergibt sich hierbei, dass die Dicke der Absorptionsschicht **20** wesentlich für eine gute Verbindung der Werkstücke ist. Es ergab sich hierbei eine optimale Dicke der Absorptionsschicht **20** aus Kohlenstoff im Bereich zwischen 5 nm und 15 nm.

### Bezugszeichenliste

- **10, 10', 10"** ...: Transparente Polymerfolien oder -platten (Dicke ≥ 10 µm)
- **11**: Transparente mikrostrukturierte Polymerfolie oder -platte
- **12**: Transparente Polymerfolie oder -platte (optional auch mikrostrukuriert)
- **13**: verschweißte Zugprobe
- **14**: Mikrokanal/Mikrostruktur
- **15**: Strahl des ersten Lasers (940 nm)
- **16**: Weg des ersten Laserstrahls (Laserscan)
- **20**: Absorptionsschicht (Kohlenstoff)
- **21**: Laserbeeinflusste Zone
- **22**: Verbindungszone
- **23**: Kohlenstoffschicht/Schweißzone (Oberfläche 20 x 10 mm²)

## Patentansprüche

1. Verfahren zum Verbinden von Werkstücken (10, 10') aus Kunststoff, wobei das verbundene Werkstück im sichtbaren Bereich transparent ist, mit den Verfahrensschritten
a) Bereitstellen der Werkstücke (10, 10') aus einem Kunststoff, der im sichtbaren Bereich und bei der Wellenlänge eines ersten Lasers transparent ist,
b) Aufbringen jeweils einer Absorptionsschicht (20) auf die Werkstücke (10, 10'), wobei höchstens ein Werkstück unbeschichtet bleibt,
c) Zusammenpressen der Werkstücke (10, 10') mit einem Anpressdruck, wobei jede Absorptionsschicht (20) zwischen zwei Werkstücken angeordnet ist,
d) Beaufschlagen einer der Absorptionsschichten (20) mit einer Laserstrahlung (15) aus dem ersten Laser, dessen Leistung so gewählt ist, dass sich hierdurch die Absorptionsschicht (20) erwärmt und dadurch die beiden der Absorptionsschicht (20) benachbarten Werkstücke (10, 10') miteinander verbunden werden,
e) gegebenenfalls Wiederholen des Verfahrensschritts d) mit einer oder mehreren weiteren Absorptionsschichten,
f) Abkühlen und Wegnehmen des Anpressdrucks,
g) Entnehmen des verbundenen Werkstücks,
wobei die Absorptionsschicht (20) aus Kohlenstoff oder Gold besteht und eine Dicke zwischen 5 nm und 15 nm aufweist.

2. Verfahren nach Anspruch 1, **dadurch gekennzeichnet, dass** die Absorptionsschicht (20) mittels Aufdampfen oder Aufsprühen auf die Werkstücke (10, 10') aufgebracht wird.

3. Verfahren nach Anspruch 1 oder 2, **dadurch gekennzeichnet, dass** das Aufbringen mindestens einer Absorptionsschicht (20) auf das Werkstück (10) durch eine strukturierte Maske hindurch erfolgt.

4. Verfahren nach einem der Ansprüche 1 bis 3, **dadurch gekennzeichnet, dass** mindestens eine auf einem Werkstück (10) aufgebrachte Absorptionsschicht (20) durch Laserablation mittels eines zweiten Lasers strukturiert wird.

5. Verfahren nach Anspruch 4, **dadurch gekennzeichnet, dass** die Wellenlänge des zweiten Lasers zwischen 250 nm und 400 nm beträgt.

6. Verfahren nach einem der Ansprüche 1 bis 5, **dadurch gekennzeichnet, dass** die Wellenlänge des ersten Lasers zwischen 800 nm und 1200 nm beträgt.

7. Verfahren nach einem der Ansprüche 1 bis 6, **dadurch gekennzeichnet, dass** die Leistung des ersten Lasers mittels eines Pyrometers geregelt wird.

8. Verfahren nach einem der Ansprüche 1 bis 7, **dadurch gekennzeichnet, dass** der Kunststoff aus Polymethylmethacrylat (PMMA), Polypropylen (PP), Polycarbonat (PC), Cycloolefincopolymer (COC), Polyvinylidenfluorid (PVDF), Polyetheretherketon (PEEK), Polysulfon (PSU), Polyamid (PA), Polyimid (PI), Polyacetal (POM), Polyäthylen (PE), Polyurethan (PUR), Polyethersulfon (PES) oder Polytetrafluorethylen (PTFE) ausgewählt ist.

9. Verfahren nach einem der Ansprüche 1 bis 8, **dadurch gekennzeichnet, dass** die Dicke des Werkstücks (10) zwischen 10 um und 10 cm beträgt.

10. Verfahren nach einem der Ansprüche 1 bis 9, **dadurch gekennzeichnet, dass** mindestens eines der Werkstücke (10, 10') Mikrostrukturen (14) aufweist.

11. Verfahren nach Anspruch 10, **dadurch gekennzeichnet, dass** die Mikrostrukturen (14) mittels eines dritten Lasers in das Werkstück (10) eingebracht werden.

12. Verfahren nach Anspruch 11, **dadurch gekennzeichnet, dass** der dritte Laser eine Wellenlänge zwischen 9 µm und 11 µm oder zwischen 150 nm und 400 nm aufweist.

## Claims

1. Method for joining plastic workpieces (10, 10'), whereby the assembled workpiece is transparent in the visible range, with the following process stages:
a) Provision of workpieces (10, 10') made of a plastic which is transparent in the visible range and at the wavelength of a first laser,
b) Application of in each case one absorption layer (20) onto the workpieces (10, 10'), whereby at most one workpiece remains uncoated,
c) Pressing together of the workpieces (10, 10') with a clamping pressure, whereby each absorption layer (20) is arranged between two workpieces,
d) Application on one of the absorption layers (20) of a laser radiation (15) from the first laser, the power of which is selected so that the absorption layer (20) is thereby heated and the two workpieces (10, 10') adjacent to the absorption layer (20) are thereby joined to each other,
e) Possibly the repeating of the process stage d) with one or more further absorption layers,
f) Cooling and removal of the clamping pressure,
g) Removal of the assembled workpiece, whereby the absorption layer (20) is made of carbon or gold and is in the range of between 5 nm and 15 nm.

2. . Method according to claim 1, **characterised in that** the absorption layer (20) is applied by evaporation or spraying onto the workpieces (10, 10').

3. . Method according to claim 1 or 2, **characterised in that** the application of at least one absorption layer (20) onto the workpiece (10) takes place through a structured mask.

4. . Method according to any one of claims 1 to 3, **characterised in that** at least one absorption layer (20) applied on a workpiece (10) is structured by laser ablation by means of a second laser.

5. . Method according to claim 4, **characterised in that** the wavelength of the second laser is between 250 nm and 400 nm.

6. . Method according to any one of claims 1 to 5, **characterised in that** the wavelength of the first laser is between 800 nm and 1200 nm.

7. . Method according to any one of claims 1 to 6, **characterised in that** the power of the first laser is set by means of a pyrometer.

8. . Method according to any one of claims 1 to 7, **characterised in that** the plastic is selected from polymethylmethacrylate (PMMA), polypropylene (PP), polycarbonate (PC), cyclic olefin copolymer (COC), polyvinylidene fluoride (PVDF), polyether ether ketone (PEEK), polysulfone (PSU), polyamide (PA), polyimide (PI), polyacetal (POM), polyethylene (PE), polyurethane (PUR), polyether sulfone (PES) or polytetrafluoroethylene (PTFE).

9. . Method according to any one of claims 1 to 8, **characterised in that** the thickness of the workpiece (10) is between 10 µm and 10 cm.

10. . Method according to any one of claims 1 to 9, **characterised in that** at least one of the workpieces (10, 10') has microstructures (14).

11. . Method according to claim 10, **characterised in that** the microstructures (14) are introduced into the workpiece (10) by means of a third laser.

12. . Method according to claim 11, **characterised in that** the third laser has a wavelength of between 9 µm and 11 µm or between 150 nm and 400 nm.

## Revendications

1. Procédé de liaison de pièces (10, 10') en matériau synthétique, la pièce reliée étant transparente dans le domaine visible, comportant les étapes consistant à :
a) préparer les pièces (10, 10') en un matériau synthétique qui est transparent dans le domaine visible et à la longueur d'ondes d'un premier laser,
b) appliquer une couche d'absorption (20) respective sur les pièces (10, 10'), au plus une pièce restant non revêtue,
c) comprimer les pièces (10, 10') entre elles avec une pression de compression, chaque couche d'absorption (20)' étant située entre deux pièces,
d) solliciter l'une des couches d'absorption (20) avec un premier rayonnement laser (15) provenant du premier laser dont la puissance est choisie de sorte qu'ainsi la couche d'absorption (20) soit chauffée et que les deux pièces (10, 10') voisines de la couche d'absorption (20) soient reliées entre elles,
e) le cas échéant répéter l'étape d) avec ou plusieurs autres couches d'absorption,
f) refroidir et évacuer la pression de compression,
g) prélever la pièce reliée,
la couche d'absorption (20) étant constituée de carbone ou d'or et ayant une épaisseur comprise entre 5 nanomètres et 15 nanomètres.

2. Procédé conforme à la revendication 1,
**caractérisé en ce que**
la couche d'absorption (20) est appliquée par vaporisation ou par pulvérisation sur les pièces (10, 10').

3. Procédé conforme à la revendication 1 ou 2,
**caractérisé en ce que**
l'application d'au moins une couche d'absorption (20) sur la pièce (10) s'effectue au travers d'un masque structuré.

4. Procédé conforme à l'une des revendications 1 à 3,
**caractérisé en ce qu'**
au moins une couche d'absorption (20) appliquée sur une pièce (10) est structurée par ablation laser au moyen d'un second laser.

5. Procédé conforme à la revendication 4,
**caractérisé en ce que**
la longueur d'onde du second laser est comprise entre 250 nm et 400 nm.

6. Procédé conforme à l'une des revendications 1 à 5,
**caractérisé en ce que**
la longueur d'onde du premier laser est comprise entre 800 nm et 1200 nm.

7. Procédé conforme à l'une des revendications 1 à 6,
**caractérisé en ce que**
la puissance du premier laser est réglée au moyen d'un pyromètre.

8. Procédé conforme à l'une des revendications 1 à 7,
**caractérisé en ce que**
le matériau synthétique est choisi parmi les matériaux synthétiques suivants : poly-méthyl méthacrylate (PMMA), polypropylène (PP), poly-carbonate (PC), copolymère de cyclo oléfine (COC), fluorure de poly-vinylidène (PVDF), polyéther éther cétone (PEEK), poly sulfone (PSU), polyamide (PA), poly imide (PI), polyacétal (POM) polyéthylène (PE), polyuréthane (PUR), poly éther sulfone (PES), et poly tétra fluor éthylène (PTFE).

9. Procédé conforme à l'une des revendications 1 à 8,
**caractérisé en ce que**
l'épaisseur de la pièce (10) est comprise entre 10 µm et 10 cm.

10. Procédé conforme à l'une des revendications 1 à 9,
**caractérisé en ce qu'**
au moins l'une des pièces (10, 10') comporte des microstructures (14).

11. Procédé conforme à la revendication 10,
**caractérisé en ce que**
les microstructures (14) sont introduites dans la pièce (10) au moyen d'un troisième laser.

12. Procédé conforme à la revendication 11,
**caractérisé en ce que**
le troisième laser a une longueur d'onde comprise entre 9 µm et 11 µm ou entre 150 nm et 400 nm.
